# EUROPÄISCHE PATENTSCHRIFT

(11) **EP 4 009 339 B1**
(45) Veröffentlichungstag und Bekanntmachung des Hinweises auf die Patenterteilung: **15.07.2026**
(21) Anmeldenummer: 20211194.4
(22) Anmeldetag: 02.12.2020
(51) Int. Cl.: H01G 2/10

(54) **KONDENSATORANORDNUNG, VERFAHREN ZU DEREN HERSTELLUNG SOWIE UMRICHTERANORDNUNG MIT DER KONDENSATORANORDNUNG**
CAPACITOR ASSEMBLY, METHOD OF MANUFACTURING THE SAME, AND CONVERTER ASSEMBLY INCLUDING THE CAPACITOR ASSEMBLY
AGENCEMENT DE CONDENSATEUR, SON PROCÉDÉ DE FABRICATION AINSI QU'AGENCEMENT D'ONDULEUR POURVU D'AGENCEMENT DE CONDENSATEUR

(43) Veröffentlichungstag der Anmeldung: 08.06.2022
(73) Patentinhaber: Siemens Energy Global GmbH & Co. KG, 81739 München (DE)
(72) Erfinder: Simon, Torsten Harald, 91315 Höchstadt a. d. Aisch (DE); Stingl, Stefan, 90473 Nürnberg (DE)

(56) Entgegenhaltungen:
- EP-A1- 3 104 486
- WO-A1-2014/207734
- WO-A1-2016/076452
- JP-A- 2010 086 744
- US-A- 4 639 827
- US-A1- 2014 286 064

## Beschreibung

Die Erfindung betrifft eine Kondensatoranordnung, ausgelegt für eine Hochspannungsanwendung (i.A. > 1 kV), mit einem Kondensatoraktivteil, einem Gehäuse zum Aufnehmen des Kondensatoraktivteils und einem Isoliermedium zwischen Gehäuse und Kondensatoraktivteil zum elektrischen Isolieren des Kondensatoraktivteils.

Bekannte Kondensatoranordnungen dieser Art umfassen SF6-isolierte Kondensatoren. Diese Kondensatoren verwenden üblicherweise das Gas Schwefelhexafluorid (SF6), beispielsweise mit einem Gasdruck von 300 bis 700 kPa, als Dielektrikum. Alternativ kann das Isoliermedium ein Isolieröl oder ein Isolierharz umfassen. Der Kondensatoraktivteil kann beispielsweise in Form gewickelter, stirnflächig kontaktierte Folien aufgebaut sein. Das Gehäuse kann ein Rundbecher aus einem leitenden Material, bevorzugt metallisch, vorzugsweise aus Aluminium sein.

Aus der WO 2014/207734 A1 ist eine Kondensatoranordnung für Hochspannungsanwendungen bekannt, bei der ein Aktivteil gegenüber dem Gehäuse mittels eines Isoliermediums isoliert ist.

Die WO 2016/076452 A1 beschreibt eine Kondensatoranordnung mit einem Zweimaterial-Gehäuse.

Die Aufgabe der Erfindung ist es, eine artgemäße Kondensatoranordnung vorzuschlagen, die möglichst zuverlässig ist. Die Aufgabe wird bei einer artgemäßen Kondensatoranordnung erfindungsgemäß durch eine insbesondere formflexible Einlage gelöst, die zwischen dem Isoliermedium und dem Gehäuse angeordnet und mit ihm elektrisch verbunden ist. Die Erfindung macht es vorteilhafterweise möglich, SF6-freie bzw. Öl-freie, relativ umweltfreundliche Kondensatoranordnungen bereitzustellen. Das Isoliermedium der erfindungsgemäßen Kondensatoranordnung kann demnach beispielsweise eine Isolatormasse sein, die den Kondensatoraktivteil zumindest teilweise, vorzugsweise vollständig, umschließt.

Nach eigenen Untersuchungen können bestimmte Umwelteinflüsse im Betrieb der Kondensatoranordnung, insbesondere Temperaturänderungen oder Vibrationen, ein Ablösen des Isoliermediums vom Gehäuse bewirken. Aufgrund des Ablösens können zwischen dem Isoliermedium und dem Gehäuse Zwischenräume entstehen, die zu einer Verschlechterung der dielektrischen Eigenschaften der Kondensatoranordnung und insbesondere zu Teilentladungen im Betrieb der Kondensatoranordnung führen können. Die Einlage zwischen dem Gehäuse und dem Isoliermedium erlaubt es vorteilhaft, das Risiko solcher Teilentladungen zu senken und auf diese Weise die Zuverlässigkeit der Kondensatoranordnung zu erhöhen. Die Einlage geht mit dem Isoliermedium (z.B. der Isolatormasse bzw. einem Isolatorverguss) vorzugsweise eine (bsp. chemische) Verbindung ein. Die Einlage ist geeigneterweise so flexibel, dass sich die Einlage nicht durch umweltbedingte Belastungen vom Isoliermedium ablöst. Zweckmäßigerweise ist die Einlage in einem Temperaturbereich von -40°C bis 70° thermisch stabil (hitzebeständig). Die Einlage ist zweckmäßigerweise leitfähig und elektrisch mit dem Gehäuse verbunden, so dass im Betrieb der Kondensatoranordnung zum Gehäuse kein Potentialunterschied besteht (die Einlage und das Gehäuse sind auf gleichem elektrischem Potenzial). Auf Grund der Verbindung mit dem Isoliermedium wird eine homogene Spannungsverteilung zwischen der Einlage und dem Kondensatoraktivteil gewährleistet. Dies reduziert die Teilentladungswahrscheinlichkeit.

Gemäß der Erfindung sind das Gehäuse und die Einlage zumindest teilweise aneinander anliegend. Zum Beispiel können das Gehäuse und die Einlage zylindrisch sein, wobei die Einlage ein Rohr, ein Schlauch oder ein entsprechend geformtes Band oder Folie ist (rohrförmig und u.U. mit Überlappung angeordnet bzw. eingelegt), das vor einer Inbetriebnahme der Kondensatoranordnung (z.B. bei deren Herstellung) an das Gehäuse innen anliegend ins Gehäuse eingeführt ist. Die Anordnung mit zylindrischer Geometrie ist relativ einfach und vermindert das Risiko von herstellungsbedingten Lufteinschlüssen.

Das Isoliermedium umfasst eine Vergussmasse aus einem Resin, also z.B. einem teilflüssigen bzw. nicht voll ausgehärtetem Harz. Ein solches Isoliermedium weist einerseits hervorragende dielektrische Eigenschaften und anderseits eine gute Formflexibilität auf, die den gesamten Raum zwischen Kondensatoraktivteil und Einlage ausfüllen kann. In dieser Ausführung ist das Isoliermedium SF6-frei und/oder Ölfrei. Vorzugsweise ist die Einlage bindefähig mit der Vergussmasse (insb. chemisch bindefähig). Geht die Einlage eine chemische Bindung mit der Vergussmasse ein, so ist die Wahrscheinlichkeit der Entstehung von Zwischenräumen zwischen der Einlage und der Vergussmasse weiter reduziert.

Erfindungsgemäß weist die Einlage eine Dicke von weniger als 2 mm auf. Insbesondere kann die Einlage eine Folie sein. Auf diese Weise ist der Einfluss der Folie auf die gesamte Isolationsfestigkeit der Anordnung relativ klein. Zudem kann die Folie relativ einfach mit der erforderlichen Formflexibilität ausgestattet werden, indem das Material der Folie geeignet gewählt wird. Die Einlage ist leitend, insbesondere eine metallisch beschichtete Polypropylenfolie. Insbesondere ist eine Folie aus Polypropylen geeignet, die (zumindest) einseitig vollständig eine Metallschicht aufweist. Die dünne Einlage schrumpft zum Beispiel bei einer Temperaturänderung mit dem Isoliermedium (bsp. Vergussmasse) mit.

Geeigneterweise ist die Einlage mit dem Gehäuse mittels einer elektrischen Anbindung verbunden, wobei die Anbindung bevorzugt Niete, Schrauben und/oder ein elektrisches Kabel umfasst. Gemäß einer besonders einfachen Ausführungsform kann die Einlage mittels einer Anbindung mit dem Gehäuse verbunden sein, die zugleich auch zu einer elektrischen Verbindung des Kondensatoraktivteils mit dem Gehäuse dient (z.B. einer entsprechenden Schraube oder dergleichen, was allerdings auch bsp. durch geeignete Pressung der Isoliermasse erreicht werden kann).

Gemäß einer Ausführungsform der Erfindung umfasst der Kondensatoraktivteil eine elektrische Reihenschaltung von Teilkondensatoren (z.B. Teilwickeln). Die gesamte Reihenschaltung ist demnach gemeinsam in dem Gehäuse untergebracht. Auf diese Weise ist eine besonders kostengünstige und zugleich zuverlässige Kondensatoranordnung bereitgestellt.

Zweckmäßigerweise weist die Kondensatoranordnung eine Spannungsfestigkeit von mindestens 1 kV, bevorzugt mindestens 10 kV Isolationsspannung auf. Bei den genannten hohen Spannungsfestigkeiten treten die Vorteile der Erfindung in einem besonderen Maße auf, denn das Risiko von Teilentladungen ist bei solchen Spannungen ansonsten besonders hoch.

Die Erfindung betrifft ferner ein Verfahren zum Herstellen einer Kondensatoranordnung.

Die Aufgabe der Erfindung ist es, ein solches Verfahren vorzuschlagen, das die einfache Herstellung einer besonders zuverlässigen Kondensatoranordnung ermöglicht.

Die Aufgabe wird bei einem artgemäßen Verfahren erfindungsgemäß dadurch gelöst, dass vor einem Befüllen eines Gehäuses mit einer elektrisch isolierenden Vergussmasse eine formflexible Einlage an einer Innenwand des Gehäuses anliegend angeordnet und mit dem Gehäuse elektrisch verbunden wird.

Die Vorteile des erfindungsgemäßen Verfahrens ergeben sich insbesondere aus den Vorteilen, die bereits im Zusammenhang mit der erfindungsgemäßen Kondensatoranordnung erörtert wurden.

Die isolierende Vergussmasse kann beispielsweise ein Harz (bzw. Resin) sein, das im Betrieb der hergestellten Kondensatoranordnung teilflüssig bzw. nicht voll ausgehärtet bleibt. Vor dem Befüllen des Gehäuses mit der Vergussmasse wird geeigneterweise ein Kondensatoraktivteil in das Gehäuse eingebracht und mit äußeren Anschlüssen der Kondensatoranordnung verbunden.

Die Erfindung betrifft des Weiteren eine Umrichteranordnung mit einer Reihenschaltung von Leistungshalbleitern.

Eine solche Umrichteranordnung kann beispielsweise Umrichterarme umfassen, die sich jeweils zwischen einem Gleichspannungspol (bzw. Gleichspannungsanschluss) und einem Wechselspannungsanschluss der Umrichteranordnung erstrecken, so dass die Umrichteranordnung bsp. zwischen einem Gleichspannungsnetz und einem Wechselspannungsnetz schaltbar ist. In jedem Umrichterarm kann eine Reihenschaltung von Schalteinheiten angeordnet sein. Beispielsweise kann jede Schalteinheit wenigstens einen Thyristor (oder auch eine Reihenschaltung von Thyristoren) aufweisen. In einem solchen Fall kann es sich damit um eine sogenannte netzgeführte Umrichteranordnung handeln.

Die Aufgabe der Erfindung ist es, eine artgemäße Umrichteranordnung anzugeben, die möglichst zuverlässig ist.

Die Aufgabe wird bei einer artgemäßen Umrichteranordnung erfindungsgemäß dadurch gelöst, dass in einem elektrischen Parallelzweig zu wenigstens einem der Leistungshalbleiter eine erfindungsgemäße Kondensatoranordnung angeordnet ist.

Die Vorteile der erfindungsgemäßen Umrichteranordnung ergeben sich insbesondere aus den Vorteilen der erfindungsgemäßen Kondensatoranordnung. Die Kondensatoranordnung ist geeigneterweise als ein Snubberkondensator eingesetzt oder Teil eines Snubberglieds, das eine Reihenschaltung der Kondensatoranordnung und eines Widerstandes umfasst. In dieser Anwendung dient die Kondensatoranordnung insbesondere zur Dämpfung von Spannungsspitzen an den Leistungshalbleitern und damit zur Erhöhung der Zuverlässigkeit der gesamten Umrichteranordnung.

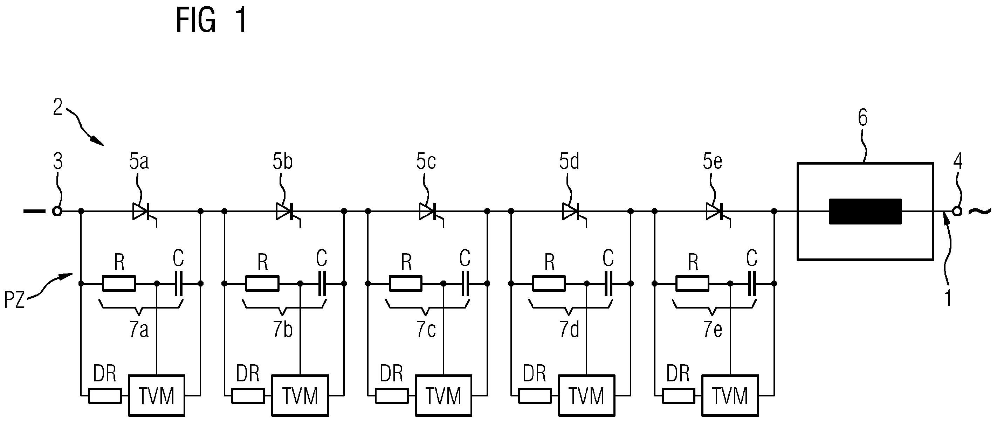

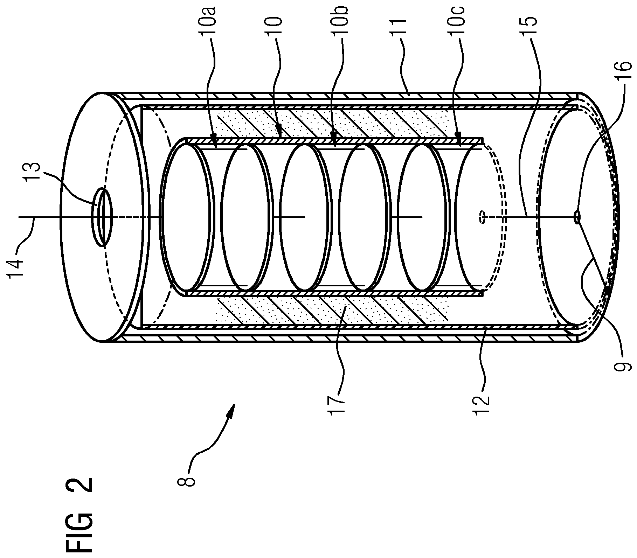

Die Erfindung wird nachfolgend anhand von in Figuren 1 und 2 dargestellten Ausführungsbeispiele weiter erläutert.
Figur 1 zeigt eine erfindungsgemäßen Umrichteranordnung in einer schematischen Darstellung;
Figur 2 zeigt eine erfindungsgemäße Kondensatoranordnung in einer schematischen Darstellung.

In Figur 1 ist ein Ventil bzw. Ventilabschnitt 1 einer Umrichteranordnung 2 dargestellt, der sich zwischen einem DC-Anschluss 3 und einem AC-Anschluss 4 erstreckt. Das Ventil 1 umfasst Thyristoren 5a-5e, die in Reihe zueinander angeordnet sind. Ferner umfasst das Ventil 1 eine Induktivität 6.

In einem elektrischen Parallelzweig PZ zu jedem der Thyristoren 5a-e ist jeweils ein Snubberglied 7a-e aus einem Widerstand R und einer Kondensatoranordnung C vorgesehen. Jeder Kondensatoranordnung C ist ferner eine Monitoring-Einheit TVM mit einem Spannungsteiler DR zugeordnet.

In Figur 2 ist eine Kondensatoranordnung 8 dargestellt, die als die Kondensatoranordnung C der Figur 1 einsetzbar ist. Die Kondensatoranordnung 8 umfasst einen Kondensatoraktivteil 10, der aus drei Teilkondensatoren in Form von Teilwickeln 10a, 10b und 10c besteht, die elektrisch in einer Reihenschaltung miteinander verbunden sind. Der Kondensatoraktivteil 10 ist in einem metallischen Gehäuse 11 angeordnet. Die Kondensatoranordnung 8 weist einen ersten Außenanschluss 14, der mittels einer Hochspannungsdurchführung durch eine Öffnung 13 im Gehäuse 11 hindurchgeführt ist. Ferner weist die Kondensatoranordnung 8 einen zweiten Außenanschluss 15 auf, der eine Schraube 16 umfasst, mittels dessen die Kondensatorwicklung 10 mit dem Gehäuse 11 elektrisch und mechanisch verbunden ist.

Die Kondensatoranordnung 8 umfasst ferner eine Einlage 12 aus einer metallisierten, dünnen Folie aus Polypropylen. Die Einlage 12 weist eine zylindrische Form auf. In Figur 2 ist aus Übersichtlichkeitsgründen ein Abstand zwischen der Einlage 12 und dem Gehäuse 11 erkennbar. Tatsächlich jedoch ist die Einlage 12 an das Gehäuse 11 innenwandig anliegend angeordnet. Mittels einer elektrischen Anbindung 9 ist eine elektrische Verbindung zwischen der Einlage 12 und der Schraube 16 und damit auch mit dem Gehäuse 11 gewährleistet.

Ein Isoliermedium 17 in Form eines Vergusses aus einem Resin umschließt den Kondensatoraktivteil 10 und füllt den Zwischenraum zwischen dem Kondensatoraktivteil 10 und der Einlage 12 aus. Die Einlage 12 ist dabei mit dem Verguss bzw. dem Isoliermedium 17 bindefähig. Falls beispielsweise aufgrund einer Temperaturänderung die Vergussmasse volumenmäßig schrumpft, so passt sich die Einlage 12 der veränderten Form des Isoliermediums 17 an, so dass die dielektrischen Eigenschaften der Kondensatoranordnung 8 im Wesentlichen erhalten bleiben. Die Einlage 12 und das Gehäuse 11 befinden sich auf gleichem elektrischem Potenzial, so dass ein Zwischenraum bzw. Lufteinschluss, der ggf. zwischen der Einlage 12 und dem Gehäuse 11 entsteht, weitgehend unerheblich ist.

## Patentansprüche

1. Kondensatoranordnung (8) für eine Hochspannungsanwendung mit
- einem Kondensatoraktivteil (10),
- einem Gehäuse (11) zum Aufnehmen des Kondensatoraktivteils (10),
- einem Isoliermedium (17) zum Isolieren des Kondensatoraktivteils (10) in Form eines Vergusses aus einem Resin,
**gekennzeichnet durch**
- eine Einlage (12) aus einer metallisierten, zylindrischen Folie aus Polypropylen, die eine Dicke von weniger als 2 mm aufweist, und die zwischen dem Isoliermedium (17) und dem Gehäuse (11) angeordnet und mit ihm elektrisch verbunden ist, wobei die Einlage (12) an das Gehäuse (11) innenwandig anliegend angeordnet ist, wobei das Isoliermedium (17) den Kondensatoraktivteil (10) umschließt und den Zwischenraum zwischen dem Kondensatoraktivteil (10) und der Einlage (12) ausfüllt, wobei die Einlage (12) mit dem Isoliermedium (17) bindefähig ist.

2. Kondensatoranordnung (8) nach einem der vorangehenden Ansprüche, wobei die Einlage (12) mit dem Gehäuse (11) mittels einer elektrischen Anbindung (9) verbunden ist, wobei die Anbindung (9) bevorzugt Niete, Schrauben und/oder ein elektrisches Kabel umfasst.

3. Kondensatoranordnung (8) nach einem der vorangehenden Ansprüche, wobei der Kondensatoraktivteil (10) eine Reihenschaltung von Teilkondensatoren (10a-c) umfasst.

4. Kondensatoranordnung (8) nach einem der vorangehenden Ansprüche, wobei die Kondensatoranordnung (8) eine Spannungsfestigkeit von mindestens 1 kV, bevorzugt mindestens 10 kV Isolationsspannung aufweist.

5. Verfahren zum Herstellen einer Kondensatoranordnung (8) nach einem der Ansprüche 1 bis 4, bei dem vor einem Befüllen des Gehäuses (11) mit der elektrisch isolierenden Vergussmasse (17) die Einlage (12) an einer Innenwand des Gehäuses (11) anliegend angeordnet und mit dem Gehäuse (11) elektrisch verbunden wird.

6. Umrichteranordnung (1) mit einer Reihenschaltung von Leistungshalbleitern (5a-e), wobei in einem elektrischen Parallelzweig (PZ) zu wenigstens einem der Leistungshalbleiter (5a-e) eine Kondensatoranordnung (C) nach einem der Ansprüche 1 bis 4 angeordnet ist.

## Claims

1. A capacitor arrangement (8) for high-voltage use, having
- an active capacitor part (10),
- a housing (11) for accommodating the active capacitor part (10),
- an insulating medium (17) for insulating the active capacitor part (10) in the form of potting made of a resin,
**characterised by**
- an insert (12) made of a metallized, cylindrical film of polypropylene, having a thickness of less than 2 mm, and arranged between the insulating medium (17) and the housing (11) and electrically connected thereto, wherein the insert (12) is arranged abutting an inner wall of the housing (11), wherein the insulating medium (17) encloses the active capacitor part (10) and fills up the gap between the active capacitor part (10) and the insert (12), wherein the insert (12) is bondable to the insulating medium (17).

2. The capacitor arrangement (8) according to any one of the preceding claims, wherein the insert (12) is connected to the housing (11) by means of an electrical connection (9), preferably wherein the connection (9) comprises rivets, bolts and/or an electrical cable.

3. The capacitor arrangement (8) according to any one of the preceding claims, wherein the active capacitor part (10) comprises a series connection of sub-capacitors (10a-c).

4. The capacitor arrangement (8) according to any one of the preceding claims, wherein the capacitor arrangement (8) has a dielectric strength of an insulation voltage of at least 1 kV, preferably of at least 10 kV.

5. A method for producing a capacitor arrangement (8) according to any one of claims 1 to 4, in which, prior to filling the housing (11) with the electrically insulating potting compound (17), the insert (12) is arranged abutting an inner wall of the housing (11) and is electrically connected to the housing (11).

6. A converter arrangement (1), having a series connection of power semiconductors (5a-e), wherein, in an electrical parallel branch (PZ) to at least one of the power semiconductors (5a-e), a capacitor arrangement (C) according to any one of claims 1 to 4 is arranged.

## Revendications

1. Agencement de condensateurs (8) pour une application à haute tension, comprenant
- une partie active de condensateur (10),
- un boîtier (11) destiné à loger la partie active de condensateur (10),
- un milieu isolant (17) pour l'isolation de la partie active de condensateur (10) sous la forme d'un enrobage constitué d'une résine,
**caractérisé par**
- un insert (12) constitué d'un film cylindrique métallisé en polypropylène, qui présente une épaisseur inférieure à 2 mm, et qui est disposé entre le milieu isolant (17) et le boîtier (11) et est relié électriquement à celui-ci, dans lequel l'insert (12) est disposé de manière à s'appuyer contre la paroi interne du boîtier (11), dans lequel le milieu isolant (17) entoure la partie active de condensateur (10) et remplit l'espace intermédiaire entre la partie active de condensateur (10) et l'insert (12), l'insert (12) étant apte à se lier avec le milieu isolant (17).

2. Agencement de condensateurs (8) selon l'une quelconque des revendications précédentes, dans lequel l'insert (12) est relié au boîtier (11) au moyen d'une liaison électrique (9), dans lequel la liaison (9) comprend de préférence des rivets, des vis et/ou un câble électrique.

3. Agencement de condensateurs (8) selon l'une quelconque des revendications précédentes, dans lequel la partie active de condensateur (10) comprend un montage en série de condensateurs partiels (10a-c).

4. Agencement de condensateurs (8) selon l'une quelconque des revendications précédentes, dans lequel l'agencement de condensateurs (8) présente une rigidité diélectrique d'au moins 1 kV, de préférence une tension d'isolement d'au moins 10 kV.

5. Procédé de fabrication d'un agencement de condensateurs (8) selon l'une quelconque des revendications 1 à 4, dans lequel, avant un remplissage du boîtier (11) avec la masse d'enrobage électriquement isolante (17), l'insert (12) est disposé de manière à s'appuyer contre une paroi interne du boîtier (11) et est relié électriquement au boîtier (11).

6. Agencement de convertisseur (1) comprenant un montage en série de semi-conducteurs de puissance (5a-e), dans lequel un agencement de condensateurs (C) selon l'une quelconque des revendications 1 à 4 est disposé dans une branche électrique parallèle (PZ) par rapport à au moins l'un des semi-conducteurs de puissance (5a-e).
